# EUROPEAN PATENT SPECIFICATION

(11) **EP 1 690 895 B1**
(45) Date of publication and mention of the grant of the patent: **19.03.2008**
(21) Application number: 06000080.9
(22) Date of filing: 03.01.2006
(51) Int. Cl.: C08L 21/00, C08L 9/06, C08K 3/04, B60C 1/00

(54) **Rubber composition and tire having tread comprising thereof**
Gummizusammensetzung und Reifen mit solche enthaltende Reifenlauffläche
Composition de caoutchouc et pneumatique comprenant bande de roulement comprenant celle-ci

(30) Priority: 10.02.2005 JP 2005034183
(43) Date of publication of application: 16.08.2006
(73) Proprietor: SUMITOMO RUBBER INDUSTRIES, LTD., Kobe-shi, Hyogo-ken (JP)
(72) Inventor: Kunisawa, Tetsuya Sumitomo Rubber Industries, Ltd., Kobe-shi Hyogo-ken (JP)
(74) Representative: Manitz, Finsterwald & Partner GbR

(56) References cited:
- EP-A- 1 035 164
- EP-A- 1 535 959
- EP-A- 1 571 009
- EP-A- 1 652 878
- WO-A-20/04000931
- WO-A-20/04005395
- US-A1- 2004 092 644
- PATENT ABSTRACTS OF JAPAN vol. 2002, no. 09, 4 September 2002 (2002-09-04) & JP 2002 155165 A (BRIDGESTONE CORP), 28 May 2002 (2002-05-28)
- PATENT ABSTRACTS OF JAPAN vol. 1999, no. 10, 31 August 1999 (1999-08-31) & JP 11 130909 A (TOYO TIRE & RUBBER CO LTD), 18 May 1999 (1999-05-18)
- PATENT ABSTRACTS OF JAPAN vol. 1997, no. 09, 30 September 1997 (1997-09-30) & JP 09 136996 A (BRIDGESTONE CORP), 27 May 1997 (1997-05-27)
- PATENT ABSTRACTS OF JAPAN vol. 011, no. 176 (C-426), 5 June 1987 (1987-06-05) & JP 62 001735 A (YOKOHAMA RUBBER CO LTD:THE), 7 January 1987 (1987-01-07)

## Description

The present invention relates to a rubber composition and a tire having a tread comprising thereof.

Superior drivability (rigidity of a tire) and tensile strength together with grip performance and abrasion resistance is required for tires mounted on a sport vehicle. When running mainly in a circuit, a race is carried out even under severe condition irrespective of season and climate; therefore superior rigidity not depending on running condition is required for those tires.

In order to improve grip performance and abrasion resistance it is known that a low molecular weight SBR is compounded with a rubber composition for a tire (see JP-A-2002-322317). However, since tires are softened during running to be insufficient in rigidity, the steering of a car tends to be difficult and they have not been superior as tires run mainly in a circuit.

WO 2004/000931 discloses a rubber composition for tires being obtained by compounding (A) 100 parts by weight of a styrene/butadiene copolymer having a weight-average molecular weight between 4.0x10⁵ and 3.0x10⁶, (B) 10 to 200 parts by weight of a hydrogenated styrene/butadiene copolymer having a weight-average molecular weight between 5.0x10³ and 2.0x10⁵ and (C) at least one member selected among resins imparting tackiness to rubber compositions and among liquid polymers having a weight-average molecular weight of 1,000 to 50,000.

EP 1,035,164 A1 relates to a rubber composition containing (A) 100 parts by weight of at least one solid diene-based elastomer selected from homopolymers and copolymers of conjugated diene and copolymers of at least one conjugated diene with a vinyl aromatic compound selected from styrene and alpha-methylstyrene and (B) between 5 and 50 phr of a liquid polymer of high vinyl polybutadiene having a vinyl content in a range of 40 to 95 percent and a Tg in a range of -5°C to -40°C.

US 2004/0092644 A1 relates to a rubber composition being based on one or more diene elastomers and a hydrocarbon plasticizing resin miscible in the diene elastomer, wherein the composition comprises 50 to 100 phr of a majority diene elastomer with a glass transition temperature between -65°C and -10°C, between 0 and 50 phr of a minority diene elastomer having a glass transition temperature between -10°C and -80°C and 5 to 35 phr of a hydrocarbon plasticizing resin.

WO 2004/005395 A2 discloses a rubber composition containing solution SBR, a butadiene rubber, silica, aromatic oil, zinc oxide, carbon black and sulfur.

It is the object of the present invention to provide a rubber composition which can produce tires exhibiting superior rigidity in a wide temperature condition in addition to improving abrasion resistance, grip performance and tensile strength in a balance.

The present invention relates to a rubber composition comprising 50 to 120 parts by weight of a filler for reinforcement containing carbon black with a nitrogen adsorption specific area of 100 to 250 m²/g, an iodine adsorption amount of 110 to 200 mg/g and a ratio of a cetyltrimethylammonium bromide adsorption specific area to the iodine adsorption amount of 0.85 to 1.2 and 0 to 100 parts by weight of silica based on 100 parts by weight of rubber components containing 50 % by weight or more of a solution polymerization styrene-butadiene rubber having a weight average molecular weight of 500,000 to 2,500,000, 40 % by weight or less of a natural rubber and 40 % by weight or less of a polybutadiene rubber, 1 to 30 parts by weight of an organic vulcanizing agent represented by the following formula: -(R-Sₓ)ₙ- wherein R is (CH₂-CH₂-O)ₘ-CH₂-CH₂, x is an integer of 3 to 6, n is an integer of 10 to 400 and m is an integer of 2 to 5, and a resin based on 100 parts by weight of the rubber components.

It is preferable that the melting point of the resin is preferably 150 to 170°C and the content of the resin is 2 to 25 parts by weight.

It is preferable that the resin comprises 2 or more of resins respectively having different melting points within a range of 80 to 170°C, the total content of the resins is 1 to 40 parts by weight and further, the content of a resin among 2 or more of the resins is 0.5 to 25 parts by weight.

It is preferable that the solution polymerization styrene-butadiene rubber is coupled with tin or silicon, the styrene content of the solution polymerization styrene-butadiene rubber is 20 to 40 % and the content of vinyl is 30 to 60 %.

The swelling ratio by toluene of the rubber composition is preferably 180 to 320 %.

Further, the present invention relates to a tire having a tread comprising the rubber composition.

The rubber composition of the present invention comprises rubber components, a filler and resins.

As the rubber components, at least one rubber selected from the group consisting of a solution polymerization styrene-butadiene rubber (S-SBR) having a weight average molecular weight (Mw) of 500,000 to 2,500,000, a natural rubber (NR) and a polybutadiene rubber (BR) is used.

S-SBR is obtained by solution polymerization. SBR (emulsion polymerization SBR) obtained by emulsion polymerization is also known additionally as SBR, but a rubber is easily softened under a high temperature condition in case of circuit running and the like by using the emulsion polymerization SBR and there occurs a problem that the rigidity of the obtained rubber composition is insufficient; therefore S-SBR is compounded with the rubber composition of the present invention.

The weight average molecular weight (Mw) of S-SBR is 500,000 or more and preferably 600,000 or more. When Mw is less than 500,000, the abrasion resistance is lowered. Further, Mw is preferably 2,500,000 or less and more preferably 2,000,000 or less. When Mw exceeds 2,500,000, processability is remarkably deteriorated at a kneading step. And production is difficult by the current production technology of a polymer and its cost tends to be high, since the molecular weight area is high molecular weight

As S-SBR, those coupled with tin and silicon are preferably used. The coupling method of S-SBR includes, for example, a method of reacting an alkali metal (Li and the like) or an alkali earth metal (Mg and the like) at the terminal end of a molecular chain of S-SBR with a tin halide or a silicon halide according to a conventional method.

The styrene content of S-SBR is preferably 20 % or more and more preferably 25 % or more. When it is less than 20 %, the grip performance tends to be lowered. Further, the styrene content is preferably 50 % or less, more preferably 45 % or less. When it exceeds 50 %, a rubber is hardened at tire running at a low temperature and the grip performance tends to be lowered.

The vinyl content of S-SBR is preferably 30 % or more, more preferably 35 % or more. When it is less than 30 %, it is not preferable because the grip performance is lowered. Further, the vinyl content is preferably 60 % or less and more preferably 55 % or less. When it exceeds 60 %, the rolling resistance of a tire tends to be increased.

The content of S-SBR is 50 % by weight or more in the rubber components and preferably 60 % by weight or more. When the content ratio is less than 50 % by weight, it is not preferable because the grip performance is lowered. Further, the content of S-SBR is preferably 100 % by weight or less, more preferably 95 % by weight or less, and more preferably 90 % by weight. When the content exceeds 95 % by weight, a rubber is hardened at tire running at low temperature and the grip performance tends to be lowered.

As the natural rubber (NR), a natural rubber such as RSS#3 grade which is general in the rubber industry is used.

The content of NR is 40 % by weight or less in the rubber components and preferably 38 % by weight or less. When the content of NR exceeds 40 % by weight, the grip performance is lowered. Further, the content of NR is preferably 5 % by weight or more, more preferably 10 % by weight or more. When the content is less than 5 % by weight, brittleness resistance tends to become worse at an extreme low temperature and processability of unvulcanizing rubber becomes worse.

As the polybutadiene rubber (BR), those such as BR150B (manufactured by Ube Industries Ltd.) and BRO 1 (manufactured by JSR Corporation) which are general in the rubber industry are used.

The content ratio of BR is 40 % by weight or less in the rubber components and preferably 38 % by weight or less. When the content exceeds 40 % by weight, the grip performance is lowered. Further, the content ratio of BR is 5 % by weight or more and more preferably 10 % by weight or more. When the content ratio of BR is less than 5 % by weight, the performance of embrittlement resistance at an extremely low temperature tends to be deteriorated.

The filler for reinforcement contains carbon black and preferably silica.

The nitrogen adsorption specific area (N₂SA) of carbon black is 100 m²/g or more and preferably 110 m²/g or more. When N₂SA is less than 100 m²/g, the abrasion resistance and grip performance are lowered because reinforcability is lowered. Further, N₂SA is preferably 250 m²/g or less and more preferably 240 m²/g or less. When N₂SA exceeds 250 m²/g, the fuel cost of a car tends to be increased because the rolling resistance of a tire is increased.

The iodine adsorption amount (IA) of carbon black is 110 mg/g or more and preferably 115 mg/g or more. When IA is less than 110 mg/g, the abrasion resistance and the grip performance are lowered. Further, IA is 200 mg/g or less and preferably 195 mg/g or less. When IA exceeds 200 mg/g, the rolling resistance of a tire is increased and the processability is deteriorated.

The cetyltrimethylammonium bromide (CTAB) adsorption specific area of carbon black is preferably 94 to 240 ml/100 g. When the CTAB adsorption specific area is less than 94 ml/100 g, the abrasion resistance and grip performance tend to be lowered. When it exceeds 240 ml/100 g, low fuel cost is not attained and processability tends to be deteriorated.

The ratio (CTAB/IA) of the CTAB adsorption specific area to the iodine adsorption amount is 0.85 or more and preferably 0.87 or more. When CTAB/IA is less than 0.85, the rolling resistance of a tire is increased. Further, CTAB/IA is 1.2 or less and preferably 1.15 or less. When CTAB/IA exceeds 1.2, the grip performance is deteriorated.

The content of carbon black is preferably 20 parts by weight or more based on 100 parts by weight of the rubber components and more preferably 25 parts by weight or more. When the content is less than 20 parts by weight, the grip performance and abrasion resistance at dry road surface tend to be lowered. Further, the content of carbon black is preferably 100 parts by weight or less and more preferably 95 parts by weight or less. When the content exceeds 100 parts by weight, the viscosity of a rubber is raised and the processability tends to be deteriorated.

Silica is not specifically limited and those prepared by a wet method or a dry method can be used.

The content of silica is 10 parts by weight or more based on 100 parts by weight of the rubber components, preferably 20 parts by weight or more, and more preferably 25 parts by weight or more. When the content is less than 10 parts by weight, grip performance becomes insufficient on wet road. The content of silica is 100 parts by weight or less and preferably 95 parts by weight or less. When the content exceeds 100 parts by weight, the processability is deteriorated because the viscosity of a rubber is raised.

The content of the filler for reinforcement is 50 parts by weight or more based on 100 parts by weight of the rubber components and preferably 55 parts by weight or more. When the content is less than 50 parts by weight, it is not preferable because the abrasion resistance and grip performance are low. Further, the content of the filler for reinforcement is 120 parts by weight or less and preferably 115 parts by weight or less. When the content exceeds 120 parts by weight, the rolling resistance of a tire is increased.

As the filler for reinforcement, contain calcium carbonate, clay and the like can be contained in addition to the fore-mentioned carbon black and silica.

The specific example of the resin used for the present invention includes an indene resin such as a coumarone resin, a petroleum resin, a phenol resin, a terpene resin, a rosin ester, a xylene resin and the like. Among these, at least one of the group consisting of an indene resin, a petroleum resin and a rosin ester are preferable, and an indene resin is more preferable in viewpoint of improving grip performance and processability of a unvulcanized rubber.

The melting point of the resin is preferably 150°C or more and more preferably 155°C or more. When the melting point is less than 150°C, the rigidity of a tire under a high temperature condition tends to be lowered. Further, the melting point of the resin is preferably 170°C or less and more preferably 165°C or less. When the melting point exceeds 170°C, the grip performance tends to be lowered because the hardness of the rubber composition is increased.

The content of the resin is 2 parts by weight or more based on 100 parts by weight of the rubber components and more preferably 3 parts by weight or more. When the content of the resin is less than 2 parts by weight, the adequate grip performance and rigidity do not tend to be obtained. Further, the content of the resin is preferably 25 parts by weight or less and more preferably 23 parts by weight or less. When the content of the resin exceeds 25 parts by weight, the strength of the rubber composition is lowered and the abrasion resistance tends to be greatly lowered.

Further, as the resin used for the present invention, a resin comprising 2 or more of resins respectively having different melting points within a range of 80 to 170°C may be used. The range of the melting point of 2 or more of the resins is preferably 85 to 165°C. When the range of the melting point is less than 80°C, the rubber composition is softened and the rigidity of a tire tends to be lowered. Further, when the range of the melting point exceeds 170°C, the rubber composition is hardened and the grip performance tends to be lowered.

Further, it is preferable to compound a combination of 2 or more of resins having different melting points and preferably a combination of 3 or more of the resins. When it is less than 2 kinds, it does not tend to be preferable because rigidity differs depending on the temperature of road surface.

When the resin comprises 2 or more of resins, the total content of the resins is preferably 1 part by weight or more based on 100 parts by weight of the rubber components and more preferably 3 parts by weight or more. When the total content is less than 1 part by weight, the adequate grip performance and rigidity do not tend to be obtained. Further, the total content of the resin is preferably 40 parts by weight or less and more preferably 35 parts by weight or less. When the total content exceeds 40 parts by weight, the rubber composition is greatly hardened and the grip performance is lowered. Further, the strength of the rubber composition is lowered and the abrasion resistance tends to be lowered.

Further, when the resin comprises 2 or more of the fore-mentioned resins, the content of one of the resins is preferably 0.5 part by weight or more based on 100 parts by weight of the rubber components and more preferably 1 part by weight or more. When the content is less than 0.5 part by weight, the adequate grip performance and rigidity do not tend to be obtained. Further, the content of one of the resins is preferably 25 parts by weight or less and more preferably 20 parts by weight or less. When the content exceeds 25 parts by weight, the content of another resin is decreased and the rubber composition is not applied to a wide range of temperature.

In the present invention, abrasion resistance, grip performance and rigidity are improved in a good balance by compounding not only the rubber components containing S-SBR and the filler for reinforcement, but also the resin. Particularly, rigidity are remarkably improved in a wide range of temperature by compounding at least two resins having different melting points.

The rubber composition of the present invention comprises an organic vulcanizing agent. The organic vulcanizing agent is the vulcanizing agent satisfying the following general formula;

-(R-Sₓ)ₙ-

wherein R is (CH₂-CH₂-O)ₘ-CH₂-CH₂, x is an integer of 3 to 6, n is an integer of 10 to 400, and m is an integer of 2 to 5.

In the formula, x is an integer of 3 to 6, more preferably an integer of 3 to 5. When x is less than 3, vulcanization tends to be delayed. When x is more than 6, production of the rubber composition tends to be difficult.

In the formula, n is an integer of 10 to 400, more preferably an integer of 10 to 300. When n is less than 10, the organic vulcanizing agent becomes volatile and handling tends to be difficult. When n is more than 400, compatibility between the organic vulcanizing agent and the rubber tend to become worse.

In the formula, m is an integer of 2 to 5, preferably an integer of 2 to 4, more preferably an integer of 2 to 3. When m is less than 2, bending resistance tends to be low. When m is more than 5, hardness of the rubber composition tends to become insufficient.

The content of the organic vulcanizing agent is at least 1 part by weight, preferably at least 2 parts by weight based on 100 parts by weight of the rubber components. When the content of the organic vulcanizing agent is less than 1 part by weight, abrasion resistance tends to be worse. The content of the organic vulcanizing agent is at most 30 parts by weight, preferably at most 25 parts by weight. When the content of the organic vulcanizing agent is more than 30 parts by weight, grip performance tends to be worse due to excess raising of hardness.

In the present invention, effects such as improving tensile strength and grip performance in good balance can be obtained by not only the rubber components containing SBR, the filler for enforcement, and the resin, but also the organic vulcanizing agent.

In the rubber composition of the present invention, a softener such as oil, a vulcanizing agent such as sulfur other than the organic vulcanizing agent, an antioxidant, wax, stearic acid, zinc oxide, a vulcanization accelerator and the like which are compounded as additives can be also compounded in addition to the fore-mentioned rubber components, filler for reinforcement, the resin and the organic vulcanizer.

In the rubber composition of the present invention, when the fore-mentioned rubber components and filler for reinforcement are compounded, in order to efficiently carry out the reaction of the rubber components with silica it is preferable that reaction temperature in a kneader (a Banbury mixer and the like) is set high. Specifically, it is preferable to set it at 150°C or more and in particular, 160 to 180°C. When the reaction temperature is less than 150°C, the reaction of a coupling agent with silica does not tend to be completed and when it exceeds 180°C, the viscosity of a rubber tends to be raised too highly.

In this case, it is desirable that kneading is carried out after improving heat resistance by changing a coupling agent for silica (silane coupling agent) from a conventional Si69 (4 sulfur atoms in a molecule) to Si75 (containing 2 sulfur atoms in a molecule, high purity) and the like.

It is preferable that 2 to 12 parts by weight of the silane coupling agent are used based on 100 parts by weight of silica. When the silane coupling agent is less than 2 parts by weight, the performance of silica cannot be adequately taken out and the abrasion resistance and the grip performance tend to be inferior and when it exceeds 12 parts by weight, the coupling agent is too much to be high cost and the abrasion resistance tends to be inferior.

The swelling ratio by toluene of the rubber composition of the present invention is preferably 180 % or more and more preferably 220 %. When the swelling ratio by toluene is less than 180 %, the durability of a rubber is inferior and the abrasion resistance tends to be deteriorated. Further, the swelling ratio by toluene is preferably 320 % or less and more preferably 310 % or less. When the swelling ratio by toluene exceeds 320 %, the reducing effect of the grip performance and rolling resistance tends to be inferior. Herein, the swelling ratio by toluene is determined by measuring a weight ratio of before and after immersion by immersing a cube of a rubber prepared to be about 5 mm for one side in toluene.

The tire of the present invention has preferably a tread comprising the fore-mentioned rubber composition in particular among tire members.

The tire of the present invention is produced by a method which is general in the tire industry. Namely, after the fore-mentioned rubber components, filler for reinforcement and resin, and an organic vulcanizing agent and additives if necessary are kneaded, the kneaded product is molded to a tread shape on a tire molding machine, and after laminating it with other tire members, vulcanization is carried out to obtain the tire of the present invention.

The tire of the present invention is preferably used as a tire which requires excellent grip performance and drivability.

### EXAMPLES

The present invention is specifically explained based on Examples, but the present invention is not limited only to these.

Various chemicals used in Examples are described below.
SBR1: T4350 (50 parts by weight of a process oil is contained based on 100 parts by weight of SBR solid content; a styrene content of 39 %; a vinyl content of 39 %; and a weight average molecular weight of 600,000 to 1,000,000) manufactured by Asahi Kasei Corporation.
BR: BR150B manufactured by Ube Industries Ltd.
SBR2: SBR NS 420 (50 parts by weight of a process oil is contained based on 100 parts by weight of SBR solid content; a styrene content of 40 %; a vinyl content of 25 %; and a weight average molecular weight of 600,000 to 1,000,000) manufactured by ZEON CORPORATION.
Carbon black: N 110, manufactured by Shouwa Cabot K. K. (a nitrogen adsorption specific area of 130 m²/g; an iodine adsorption amount of 145 mg/g, cetyltrimethylammonium bromide adsorption specific area of 126ml/100g, and a cetyltrimethylammonium bromide adsorption specific area to the iodine adsorption amount of 0.87).
Silica: ULTRASIL VN3 manufactured by Degussa Corporation.
Coupling agent: Si75 manufactured by Degussa Corporation.
Process oil: DIANA PROCESS PS32 manufactured by Idemitsu Kosan Co., Ltd.
Wax: SUNNOC WAX, manufactured by OUCHISHINKO CHEMICAL INDUSTRIAL CO., LTD.
Antioxidant: SANTOFLEX 13 manufactured by Flexsys Corporation.
Stearic acid: KIRI manufactured by NOF Corporation.
Zinc oxide: Zinc Oxide No.2 manufactured by Mitsui Mining And Smelting Corporation.
Resin 1: ESCURON G90 manufactured by Nippon Steel Chemical Co., Ltd. (coumarone resin; a melting point of 90°C).
Resin 2: ESCURON V120 manufactured by Nippon Steel Chemical Co., Ltd. (coumarone resin; a melting point of 120°C).
Resin 3: NEOPOLYMER 140 manufactured by Nippon Petrochemicals Co., Ltd. (petroleum base resin; a melting point of 140°C).
Resin 4: PENSEL D-160 manufactured by Arakawa Chemical Industries Ltd. (rosin ester; a melting point of 160°C).
Sulfur: Sulfur Powder manufactured by Tsurumi Chemical Industry Co., Ltd.
Organic vulcanizing agent: 2OS4 manufactured by Kawaguchi Chemical Industry Co. Ltd. (in the above general formula of the organic vulcanizing agent, m=2, x=4, n=200)
Vulcanization accelerator 1: NOCCELER NS (N-tert-butyl-2-benzothiazolyl sulfenamide) manufactured by Ouchishinko Chemical Industrial CO., LTD.
Vulcanization accelerator 2: Soxinol D manufactured by Sumitomo Chemical Co., Ltd.

### (Preparation of rubber compositions for test)

Various chemicals excluding sulfur, an organic vulcanizing agent and a vulcanization accelerator were kneaded with a Banbury mixer (1.7 L Banbury mixer manufactured by Kobe Steel Ltd.) at 165°C for 5 minutes according to the respective compounding contents shown in Tables 1 and 2 (process 1), and then sulfur, the organic vulcanizing agent and the vulcanization accelerator were added thereto and kneaded with a twin roller at 110°C or less for 3 minutes (process 2). The kneaded articles obtained were vulcanized at 175°C for 10 minutes (process 3) to prepare rubber compositions for test.

### (Preparation of tires for test of EXAMPLES 1 to 20 and COMPARATIVE EXAMPLE 1)

Various chemicals excluding sulfur and a vulcanization accelerator were kneaded with a Banbury mixer (1.7 L Banbury mixer manufactured by Kobe Steel Ltd.) at 165°C for 5 minutes according to the respective compounding contents shown in Tables 1 and 2 (process 1), and then sulfur and a vulcanization accelerator were added thereto and kneaded with a twin roller at 110°C for 3 minutes (process 2) to prepare rubber sheets. The rubber sheets were laminatred to make a tread shape, uncured tires were molded in combination with other tire members by a tire molding machine, and the uncured tires were vulcanized at 175°C for 10 minutes (process 4) to prepare tires for test (tire size: 215/40R 17) of EXAMPLES 1 to 20 and COMPARATIVE

### EXAMPLES 1.

### (Preparation of tires for test of EXAMPLES 21 to 25 and COMPARATIVE EXAMPLES 2 to 3)

Tires for test of EXAMPLES 21 to 25 and COMPARATIVE EXAMPLES 2 to 3 were prepared in the same manner as in EXAMPLES 1 to 20 and COMPARATIVE EXAMPLE 1, other than that in the process 1, various chemicals excluding sulfur, an organic vulcanizing agent and a vulcanization accelerator were kneaded according to the respective compounding contents shown in Tables 3, in the process 2, sulfur, the organic vulcanizing agent and the vulcanization accelerator were added thereto and kneaded, and in the process 4 tires for test (tire size: 235/40R 17) were prepared.

### EXAMPLES 1 to 15 and COMPARATIVE EXAMPLE 1

### (Rigidities 1 to 4)

In-vehicle running was carried out on the test course of dry asphalt road surface under respectively different road surface temperature conditions using a vehicle mounted with the tires for test. A test driver evaluated sensually the rigidity of tires in drivability at that time. The rigidity of tires under a condition in which the temperature of road surface was 0°C or more and less than 15°C was referred to as Rigidity 1, the rigidity of tires under a condition in which the temperature of road surface was 15°C or more and less than 30°C was referred to as Rigidity 2, the rigidity of tires under a condition in which the temperature of road surface was 30°C or more and less than 45°C was referred to as Rigidity 3, and the rigidity of tires under a condition in which the temperature of road surface was 45°C or more and less than 60°C was referred to as Rigidity 4. Further, the evaluation of the rigidity of tires was carried out by evaluation at 5 stages below. 5: Very good, 4: good, 3: normal, 2: slightly poor, 1: poor

### (Swelling ratio by toluene)

A cube of a rubber having a side of 5 mm was cut out from the rubber compositions for test and immersed in toluene for 24 hours, and then a weight ratio (%) after immersion to before immersion was measured.

Test results are shown in Table 1.

**TABLE 1**

| | Examples | | | | | | | | | | | | | | | Com. Ex. |
|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 1 |
| Compounding (parts by weight) | | | | | | | | | | | | | | | | |
| SBR | 120 | 120 | 120 | 120 | 120 | 120 | 120 | 120 | 120 | 120 | 120 | 120 | 120 | 120 | 120 | 120 |
| BR | 20 | 20 | 20 | 20 | 20 | 20 | 20 | 20 | 20 | 20 | 20 | 20 | 20 | 20 | 20 | 20 |
| Carbon black | 70 | 70 | 70 | 70 | 70 | 70 | 70 | 70 | 70 | 70 | 70 | 70 | 70 | 70 | 70 | 70 |
| Silica | 40 | 40 | 40 | 40 | 40 | 40 | 40 | 40 | 40 | 40 | 40 | 40 | 40 | 40 | 40 | 40 |
| Coupling agent | 3.2 | 3.2 | 3.2 | 3.2 | 3.2 | 3.2 | 3.2 | 3.2 | 3.2 | 3.2 | 3.2 | 3.2 | 3.2 | 3.2 | 3.2 | 3.2 |
| Process oil | 10 | 10 | 10 | 10 | 10 | 10 | 10 | 10 | 10 | 10 | 10 | 10 | 10 | 10 | 10 | 10 |
| Wax | 2 | 2 | 2 | 2 | 2 | 2 | 2 | 2 | 2 | 2 | 2 | 2 | 2 | 2 | 2 | 2 |
| Antioxidant | 2 | 2 | 2 | 2 | 2 | 2 | 2 | 2 | 2 | 2 | 2 | 2 | 2 | 2 | 2 | 2 |
| Stearic acid | 2 | 2 | 2 | 2 | 2 | 2 | 2 | 2 | 2 | 2 | 2 | 2 | 2 | 2 | 2 | 2 |
| Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Resin 1 | 7.5 | 7.5 | 7.5 | - | - | - | 5 | 5 | 5 | - | 3.75 | 15 | - | - | - | - |
| Resin 2 | 7.5 | - | - | 7.5 | 7.5 | - | 5 | 5 | - | 5 | 3.75 | - | 15 | - | - | - |
| Resin 3 | - | 7.5 | - | 7.5 | - | 7.5 | 5 | - | 5 | 5 | 3.75 | - | - | 15 | - | - |
| Resin 4 | - | - | 7.5 | - | 7.5 | 7.5 | - | 5 | 5 | 5 | 3.75 | - | - | - | 15 | - |
| Sulfur | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Vulcanization accelerator 1 | 2 | 2 | 2 | 2 | 2 | 2 | 2 | 2 | 2 | 2 | 2 | 2 | 2 | 2 | 2 | 2 |
| Vulcanization accelerator 2 | 1 | 1 | 1 | 1 | 1 | 1 | 1 | 1 | 1 | 1 | 1 | 1 | 1 | 1 | 1 | 1 |

| Evaluation | | | | | | | | | | | | | | | | |
|---|---|---|---|---|---|---|---|---|---|---|---|---|---|---|---|---|
| Rigidity 1 | 5 | 5 | 5 | 4 | 4 | 4 | 5 | 5 | 5 | 4 | 5 | 5 | 3.5 | 3 | 2.5 | 3 |
| Rigidity 2 | 5 | 4 | 4 | 5 | 5 | 4 | 5 | 5 | 4 | 5 | 5 | 4 | 5 | 4 | 3.5 | 3 |
| Rigidity 3 | 4 | 5 | 4 | 5 | 4 | 5 | 5 | 4 | 5 | 5 | 5 | 3.5 | 4.5 | 5 | 4.5 | 3 |
| Rigidity 4 | 4 | 4 | 5 | 4 | 5 | 5 | 4 | 5 | 5 | 5 | 5 | 3 | 3 | 4 | 5 | 3 |
| Swelling ratio by toluene | 245 | 244 | 244 | 245 | 244 | 245 | 247 | 246 | 246 | 246 | 245 | 244 | 245 | 245 | 244 | 240 |

Rigidity of the tires for test of Examples 1 to 15 containing the resin is improved in comparison with the tires for test of Comparative Example 1 containing no resin. Among these, the tires for test of Examples 1 to 11 in which two or more of the resins having different melting points is compounded show excellent rigidity even if the condition of the temperature of road surface is different.

### EXAMPLES 16 to 20 and COMPARATIVE EXAMPLE 1

### (Abrasion resistance)

The abrasion amount of the rubber compositions for test was measured at conditions of room temperature, a loading load of 1.0 kgf and a slipping ratio of 30 % using a Lambourn abrasion tester. Further, the reciprocal of the abrasion amount of Comparative Example 1 was referred to as 100, and the reciprocals of the abrasion amounts of other Examples were respectively by index. It is indicated that the larger the numerical value is, the superior the abrasion resistance is.

### (Grip performance)

In-vehicle running was carried out on the test course of dry asphalt road surface having the temperature of road surface of 0°C or more and less than 60°C using a vehicle mounted with tires for test. A test driver evaluated sensually the grip performance (grip feeling, brake performance and traction performance) of tires in drivability at that time. The evaluation of tire grip performance was carried out with the following 5 stage evaluation.
5: Very good, 4: good, 3: normal, 2: slightly poor, 1: poor

### (Rigidity)

In-vehicle running was carried out on the test course of dry asphalt road surface having the temperature of road surface of 0°C or more and less than 60°C using a vehicle mounting tires for test. A test driver evaluated sensually the rigidity of tires in drivability at that time. The evaluation of tire grip performance was carried out with the following 5 stage evaluation. 5: Very good, 4: good, 3: normal, 2: slightly poor, 1: poor

### (Swelling ratio by toluene)

A cube of a rubber having a side of 5 mm was cut out from the rubber compositions for test and immersed in toluene for 24 hours, and then a weight ratio (%) after immersion to before immersion was measured.

Test results are shown in Table 2.

**TABLE 2**

| | Examples | | | | | Com. Ex. |
|---|---|---|---|---|---|---|
| | 16 | 17 | 18 | 19 | 20 | 1 |
| Compounding (parts by weight) | | | | | | |
| SBR1 | 120 | 120 | 120 | 120 | 120 | 120 |
| BR | 20 | 20 | 20 | 20 | 20 | 20 |
| Carbon black | 70 | 70 | 70 | 70 | 70 | 70 |
| Silica | 40 | 40 | 40 | 40 | 40 | 40 |
| Coupling agent | 3.2 | 3.2 | 3.2 | 3.2 | 3.2 | 3.2 |
| Process oil | 10 | 10 | 10 | 10 | 10 | 10 |
| Wax | 2 | 2 | 2 | 2 | 2 | 2 |
| Antioxidant | 2 | 2 | 2 | 2 | 2 | 2 |
| Stearic acid | 2 | 2 | 2 | 2 | 2 | 2 |
| Zinc oxide | 2.5 | 2.5 | 2.5 | 2.5 | 2.5 | 2.5 |
| Resin 4 | 2 | 10 | 25 | 1 | 30 | - |
| Sulfur | 2.5 | 2.5 | 2.5 | 2.5 | 2.5 | 2.5 |
| Vulcanization accelerator 1 | 2 | 2 | 2 | 2 | 2 | 2 |
| Vulcanization accelerator 2 | 1 | 1 | 1 | 1 | 1 | 1 |

| Evaluation | | | | | | |
|---|---|---|---|---|---|---|
| Abrasion resistance | 101 | 103 | 99 | 100 | 94 | 100 |
| Grip performance | 4 | 4 | 4 | 3 | 5 | 3 |
| Rigidity | 4 | 4 | 5 | 3 | 5 | 3 |
| Swelling ratio by toluene | 241 | 244 | 251 | 240 | 255 | 240 |

Abrasion resistance, grip performance and rigidity for the tires for test of Examples 16 to 18 containing the resin are improved in good balance in comparison with the tires for test of Comparative Example 1 containing no resin.

### EXAMPLES 21 to 25 and COMPARATIVE EXAMPLES 2 to 3

### (Grip performance)

In-vehicle running was carried out on the test course of dry asphalt road surface having the temperature of road surface of 0°C or more and less than 60°C using a vehicle mounted with tires for test. A test driver evaluated sensually the grip performance (grip feeling, brake performance and traction performance) of tires in drivability at that time. The evaluation of tire grip performance was carried out with the following 5 stage evaluation.
5: Very good, 4: good, 3: normal, 2: slightly poor, 1: poor

### (Tensile strength)

Tensile test was carried out under the condition of 100°C and 72 hours using No.3 dumbbell specimens comprising rubber sheet for test tensile which was deteriorated by thermally oxidation according to JIS K 6251 "Vulcanized rubber and thermoplastic rubber -how to measure tensile property- " to measure tensile strength at break (TB) and elongation at break (EB), respectively.

Test results are shown in Table 3.

**TABLE 3**

| | Examples | | | | | Com. Ex. | |
|---|---|---|---|---|---|---|---|
| | 21 | 22 | 23 | 24 | 25 | 2 | 3 |
| Compound (parts by weight) | | | | | | | |
| SBR2 | 135 | 135 | 135 | 135 | 135 | 135 | 135 |
| BR | 10 | 10 | 10 | 10 | 10 | 10 | 10 |
| Carbon black | 70 | 70 | 70 | 70 | 70 | 70 | 70 |
| Silica | 40 | 40 | 40 | 40 | 40 | 40 | 40 |
| Coupling agent | 3.2 | 3.2 | 3.2 | 3.2 | 3.2 | 3.2 | 3.2 |
| Process oil | 20 | 20 | 20 | 20 | 20 | 20 | 20 |
| Wax | 2 | 2 | 2 | 2 | 2 | 2 | 2 |
| Antioxidant | 2 | 2 | 2 | 2 | 2 | 2 | 2 |
| Stearic acid | 2 | 2 | 2 | 2 | 2 | 2 | 2 |
| Zinc oxide | 2.5 | 2.5 | 2.5 | 2.5 | 2.5 | 2.5 | 2.5 |
| Resin 2 | 2 | 10 | 25 | 10 | 30 | - | - |
| Sulfur | 1.4 | - | - | 1.9 | - | 1.9 | - |
| Organic vulcanizing agent | 1 | 10 | 30 | - | 35 | - | 10 |
| Vulcanization accelerator 1 | 2 | 2 | 2 | 2 | 2 | 2 | 2 |
| Vulcanization accelerator 2 | 1 | 1 | 1 | 1 | 1 | 1 | 1 |

| Evaluation | | | | | | | |
|---|---|---|---|---|---|---|---|
| Grip performance | 3.5 | 4.5 | 5 | 4.5 | 5 | 3 | 3 |
| Strength at break (TB) | 13.0 | 13.5 | 13.2 | 10.5 | 11.0 | 12.5 | 15.5 |
| Elongation at break (EB) | 455 | 455 | 460 | 395 | 405 | 450 | 510 |

IN EXAMPLES 21 and 23, grip performance and tensile strength can be improved in good balance compared with COMPARATIVE EXAMPLES 2 to 3. Particularly, in EXAMPLES 21 to 23 containing the specific amount of the organic vulcanizing agent, both grip performance and tensile strength can be improved remarkably.

According to the present invention, there can be provided a rubber composition capable of improving the abrasion resistance, grip performance, rigidity and tensile strength of a tire in good balance by containing specific rubber components, a filler for reinforcement and further a specific amount of a resin having a high melting point and the tire having the tread comprising the composition. In particular, there can be provided a rubber composition which can exhibit the superior rigidity of a tire even at a wide temperature condition by containing a specific amount of two or more of resins having different melting points as the fore-mentioned resin can be provided. And also, there can be provided the rubber composition which can highly improve both grip performance and tensile strength by containing the specific organic vulcanizing agent in a specific amount.

## Claims

1. A rubber composition comprising 50 to 120 parts by weight of a filler for reinforcement containing carbon black with a nitrogen adsorption specific area of 100 to 250 m²/g, an iodine adsorption amount of 110 to 200 mg/g and a ratio of a cetyltrimethylammonium bromide adsorption specific area to the iodine adsorption amount of 0.85 to 1.2 and 0 to 100 parts by weight of silica based on 100 parts by weight of rubber components containing 50 % by weight or more of a solution polymerization sty= rene-butadiene rubber having a weight average molecular weight of 500,000 to 2,500,000, 40 % by weight or less of a natural rubber and 40 % by weight or less of a polybutadiene rubber, 1 to 30 parts by weight of an organic vulcanizing agent represented by the following formula:
-(R-Sₓ)ₙ-
wherein R is (CH₂-CH₂-O)ₘ-CH₂-CH₂, x is an integer of 3 to 6, n is an integer of 10 to 400 and m is an integer of 2 to 5, and a resin based on 100 parts by weight of the rubber components.

2. The rubber composition according to Claim 1, wherein the melting point of the resin is 150 to 170°C and the content of the resin is 2 to 25 parts by weight.

3. The rubber composition according to Claim 1, wherein the resin comprises at least 2 of resins respectively having different melting points within a range of 80 to 170°C, the total content of the resins is 1 to 40 parts by weight and further, the content of a resin among 2 or more of the resins is 0.5 to 25 parts by weight.

4. The rubber composition according to Claim 1, 2 or 3, wherein the solution polymerization styrene-butadiene rubber is coupled with tin or silicon, the styrene content of the solution polymerization styrene-butadiene rubber is 20 to 40 % and the content of vinyl is 30 to 60 %.

5. The rubber composition according to Claim 1, 2, 3 or 4, wherein swelling ratio by toluene is 180 to 320 %.

6. A tire having a tread comprising the rubber composition according to Claim 1, 2, 3, 4 or 5.

## Patentansprüche

1. Kautschukzusammensetzung, welche 50 bis 120 Gewichtsteile eines Füllstoffes zur Verstärkung enthaltend Ruß mit einer durch Stickstoffadsorption gemessenen spezifischen Oberfläche zwischen 100 und 250 m²/g, mit einer Iodadsorptionsmenge zwischen 110 und 200 mg/g und mit einem Verhältnis der durch Cetyltrimethylammoniumbromidadsorption gemessenen spezifischen Oberfläche zu der Iodadsorptionsmenge zwischen 0,85 und 1,2 sowie 0 bis 100 Gewichtsteile Silica bezogen auf 100 Gewichtsteile der Kautschukkomponenten enthaltend 50 Gew.-% oder mehr eines durch Lösemittelpolymerisation hergestellten Styrol-Butadien-Kautschuks mit einem gewichtsgemittelten Molekulargewicht zwischen 500.000 und 2.500.000, 40 Gew.-% oder weniger eines Naturkautschuks und 40 Gew.-% oder weniger eines Polybutadienkautschuks, 1 bis 30 Gewichtsteile eines organischen Vulkanisierungsmittels wiedergegeben durch die allgemeine Formel:
-(R-Sₓ)ₙ-
worin R (CH₂CH₂-O)ₘ-CH₂-CH₂ ist, x eine ganze Zahl zwischen 3 und 6 ist, n eine ganze Zahl zwischen 10 und 400 ist und m eine ganze Zahl zwischen 2 und 5 ist, sowie ein Harz bezogen auf 100 Gewichtsteile der Kautschukkomponenten enthält.

2. Kautschukzusammensetzung nach Anspruch 1, wobei der Schmelzpunkt des Harzes 150 bis 170 °C beträgt und die Menge des Harzes 2 bis 25 Gewichtsteile beträgt.

3. Kautschukzusammensetzung nach Anspruch 1, wobei das Harz wenigstens zwei Harze enthält, welche jeweils unterschiedliche Schmelzpunkte in einem Bereich zwischen 80 und 170 °C aufweisen, wobei die Gesamtmenge der Harze 1 bis 40 Gewichtsteile beträgt und ferner die Menge eines Harzes von den 2 oder mehr der Harze 0,5 bis 25 Gewichtsteile beträgt.

4. Kautschukzusammensetzung nach Anspruch 1, 2 oder 3, wobei der durch Lösemittelpolymerisation hergestellte Styrol-Butadien-Kautschuk mit Zinn oder mit Silizium gekoppelt ist, der Styrolgehalt des durch Lösemittelpolymerisation hergestellten Styrol-Butadien-Kautschuks 20 bis 40 % beträgt und der Gehalt an Vinyl 30 bis 60 % beträgt.

5. Kautschukzusammensetzung nach Anspruch 1, 2, 3 oder 4, wobei das Quellverhältnis in Toluol 180 bis 320 % beträgt.

6. Reifen mit einer Lauffläche enthaltend die Kautschukzusammensetzung nach einem der Ansprüche 1, 2, 3, 4 oder 5.

## Revendications

1. Composition de caoutchouc comprenant 50 à 120 parties en poids d'une charge de renforcement contenant du noir de carbone ayant une aire spécifique d'adsorption d'azote de 100 à 250 m²/g, une quantité d'adsorption d'iode de 110 à 200 mg/g et un rapport de l'aire spécifique d'adsorption du bromure de cétyltriméthylammonium à la quantité d'adsorption d'iode de 0,85 à 1,2, et 0 à 100 parties en poids de silice, pour 100 parties en poids des composants caoutchoucs, contenant 50 % en poids ou plus d'un caoutchouc de styrène/butadiène polymérisé en solution ayant une masse moléculaire moyenne en masse de 500 000 à 2 500 000, 40 % en poids ou moins d'un caoutchouc naturel et 40 % en poids ou moins d'un caoutchouc de polybutadiène, 1 à 30 parties en poids d'un agent de vulcanisation organique représenté par la formule suivante :
-(R-Sₓ)ₙ-
dans laquelle R est (CH₂-CH₂-O)ₘ-CH₂-CH₂, x est un entier de 3 à 6, n est un entier de 10 à 400 et m est un entier de 2 à 5, et une résine, pour 100 parties en poids des composants caoutchoucs.

2. Composition de caoutchouc selon la revendication 1, dans laquelle le point de fusion de la résine est de 150 à 170°C et la teneur en la résine est de 2 à 25 parties en poids.

3. Composition de caoutchouc selon la revendication 1, dans laquelle la résine comprend au moins 2 résines ayant respectivement des points de fusion différents situés dans la plage allant de 80 à 170°C, la teneur totale en les résines est de 1 à 40 parties en poids et en outre la teneur en une résine parmi deux ou plus des résines est de 0,5 à 25 parties en poids.

4. Composition de caoutchouc selon la revendication 1, 2 ou 3, dans laquelle le caoutchouc de styrène/butadiène polymérisé en solution est couplé avec de l'étain ou du silicium, la teneur en styrène du caoutchouc de styrène/butadiène polymérisé en solution est de 20 à 40 % et la teneur en vinyle est de 30 à 60 %.

5. Composition de caoutchouc selon la revendication 1, 2, 3 ou 4, dans laquelle le rapport de gonflement par le toluène est de 180 à 320 %.

6. Pneu ayant une bande comprenant la composition de caoutchouc selon la revendication 1, 2, 3, 4 ou 5.
